# EUROPEAN PATENT APPLICATION

(11) **EP 0 920 016 A2**
(43) Date of publication of application: **02.06.1999**
(21) Application number: 98309599.3
(22) Date of filing: 24.11.1998
(51) Int. Cl.: G11B 27/10, G11B 19/02, G11B 20/12, G11B 27/30, G11B 27/32, G09B 5/06

(54) **Control of recording medium reproduction**

(30) Priority: 26.11.1997 JP 324438/97
(71) Applicant: SONY CORPORATION, Tokyo (JP)
(72) Inventor: Nakazawa, Hiroshi, Shinagawa-ku, Tokyo (JP)
(74) Representative: Ayers, Martyn Lewis Stanley

(57) **Abstract**

According to the present invention, each program managed with U-TOC is divided into a plurality of record units. A cue signal is recorded to each of the record units. An audio signal of a word or sentence is recorded to each record unit. With the cue signal, programs that exceeds the maximum number managed with U-TOC can be handled. Thus, an audio signal of a word or sentence can be accessed and reproduced.

## Description

The present invention relates to a recording medium, a reproducing apparatus, a reproducing system, and a remote controlling apparatus which may, for example, be suitable for learning a language. The recording medium may, for example, be an optical-magnetic disc.

To learn a foreign language, the learner should repeatedly listen to basic words, phrases, and sentences and repeatedly speak them. Foreign language learning materials that have record mediums on which words and sentences were pronounced by native speakers have been marketed. A learner sometimes records a language program, repeatedly listens to it, and practice it. In addition, the learner sometimes records his or her pronunciation and checks them.

As such foreign language learning materials, analog compact cassette tapes have been widely used. However, with an analog compact cassette tape, it takes a time to access a desired record position. Thus, it is inconvenient to repeatedly listen to the same part or practice the pronunciation. In addition, analog compact cassette tapes do not provide sufficient sound quality.

In recent years, such analog compact cassette tapes have been replaced with Mini Discs (trade mark: hereinafter referred to as MD). With an MD, data can be recorded and reproduced. In addition, with an MD, a desired record position can be accessed at high speed. Moreover, the sound quality of an MD is superior to that of an analog compact cassette tape. Furthermore, it is easy to handle an MD. Thus, it is expected that MDs will become excellent foreign language learning materials.

When a learner learns a foreign language, he or she often performs a repeat operation and a search operation so as to repeatedly learn each word and each sentence. In an MD, data is managed with a particular area named U-TOC (User Table of Contents). In U-TOC, program numbers and start/end addresses of individual programs are managed. In a disc reproducing apparatus that reproduces data from an MD, the repeat operation and the search operation are performed with U-TOC.

The MD has been developed in the assumption that music data is recorded. The maximum number of programs that can be managed with U-TOC is 255. When music data is recorded to an MD, the maximum number of programs that is 255 managed with U-TOC is sufficient.

However, when language data is handled, since a word or a sentence is one record unit (or one record element), the number of programs managed with U-TOC is insufficient. In other words, in language data, data is accessed as a word such as "Cat" or "Dog" or a sentence such as "This is a book." or "Good morning." Such a word or such a sentence last only several seconds. On the other hand, an MD has a storage capacity of up to 74 minutes. Thus, the maximum number of programs that is 255 managed with U-TOC is insufficient.

To solve such a program, a new management area may be added or U-TOC may be modified so as to increase the number of programs that can be managed. However, in this case, there will be a problem with respect to compatibility.

A first aspect of the present invention is a record medium, comprising a management area for managing a record position of a program, and a program area in which a cue signal is recorded, the cue signal being superimposed with the program, the program being divided into a plurality of record units with the cue signal.

A second aspect of the present invention is a reproducing apparatus, comprising a reproducing means for reproducing a signal from a record medium having a management area for managing a record position of a program and a program area in which a cue signal is recorded, the cue signal being superimposed with the program, the program being divided into a plurality of record units with the cue signal, a cue signal detecting means for detecting the cue signal reproduced from the reproducing means, a means for access-controlling each program corresponding to a record position managed in the management area, and a means for access-controlling each of record units divided corresponding to the cue signal detected by the cue signal detecting means.

A third aspect of the present invention is a reproducing system, comprising a reproducing portion for reproducing a signal from a record medium having a management area for managing a record position of a program and a program area in which a cue signal is recorded, the cue signal being superimposed with the program, the program being divided into a plurality of record units with the cue signal, and a remote controlling portion, wherein the reproducing portion has a reproducing means for reproducing the management area and the program area of the record medium, a travel controlling means for traveling the reproducing means corresponding to a record position of the management area reproduced by the reproducing means, and an outputting means for outputting a program and a cue signal of the program area reproduced by the reproducing means, wherein the remote controlling means has a detecting means for detecting the cue signal that is output from the outputting means of the reproducing portion, a storing means for storing a reproduction address of the reproducing means of the reproducing portion when the cue signal is detected by the detecting means, an operating means for causing the reproducing means to travel for each of a plurality of record units divided with the cue signal, and a transferring means for transferring a transfer command of the operating means and a reproduction address stored in the storing means to the travel controlling means of the reproducing portion, and wherein the operating means of the remote controlling portion is operated, the travel controlling means travels the reproducing means corresponding to the reproduction address stored in the storing means of the remote controlling portion.

A fourth aspect of the present invention is a remote controlling apparatus for controlling a reproducing apparatus that reproduces signals from a first record medium and a second record medium, the first record medium having a management area and a program area, a record position of a program being managed in the management area, the program being recorded in the program area, audio signals of at least two channels being recorded in the program area, the second record medium having a management area and a program area, a record position of a program being managed in the management area, the program being recorded in the program area, the program area being composed of at least two channels, an audio signal being recorded on a first channel, a cue signal being recorded on a second channel, one program being divided into a plurality of record units with the cue signal, the remote controlling apparatus comprising a detecting means for detecting the cue signal that is output from the reproducing apparatus, a determining means for determining whether the current record medium is the first record medium or the second record medium depending on whether the cue signal is present or absent, a switching means for outputting the audio signals of at least two channels reproduced from the first record medium when the determined result by the determining means is the first record medium and for outputting the audio signal of the first channel reproduced from the second record medium to the second channel when the determined result by the determining means is the second record medium, and an outputting means for outputting the audio signals selected by the switching means.

The hereinafter described embodiments of the present invention can provide a recording medium, a reproducing apparatus, reproducing system, and a remote controlling apparatus that allow smaller record units divided from one program managed with a management area to be accessed and the compatibility to be maintained.

Preferably, one program managed with U-TOC is divided into a plurality of record units. A cue signal is recorded to each record unit. An audio signal of for example a word or a sentence in a short period is recorded to each record unit. With the cue signal, programs that exceed the maximum number of programs managed with U-TOC can be handled. An audio signal of for example a word or a sentence in a short period can be accessed and reproduced.

These and other features and advantages of the present invention will become more apparent from the following detailed description of preferred embodiments given by way of non-limitative example with reference to the accompanying drawings, in which:
Fig. 1 is an external view showing a reproducing apparatus and a reproducing system according to the present invention;
Fig. 2 is block diagram showing the overall structure of the reproducing apparatus according to the present invention;
Fig. 3 is a table showing sector 0 of U-TOC for managing record positions of individual programs;
Fig. 4 is a table showing sector 1 of U-TOC for managing character information corresponding to individual programs;
Fig. 5 is a block diagram showing the structure of a remote controlling apparatus according to a first embodiment of the present invention;
Fig. 6 is a block diagram showing a detecting circuit for a cue signal recorded on a record medium;
Fig. 7A is a schematic diagram showing an audio signal recorded to a record unit of a program according to a first embodiment of the present invention;
Fig. 7B is a schematic diagram showing a cue signal recorded to a record unit of a program according to the first embodiment of the present invention;
Fig. 8 is a flow chart showing an operation for accessing and reproducing each record unit of a program;
Fig. 9 is a table showing a start address and an end address of each record unit of a program;
Fig. 10 is a block diagram showing another example of the structure of the remote controlling apparatus according to the first embodiment of the present invention;

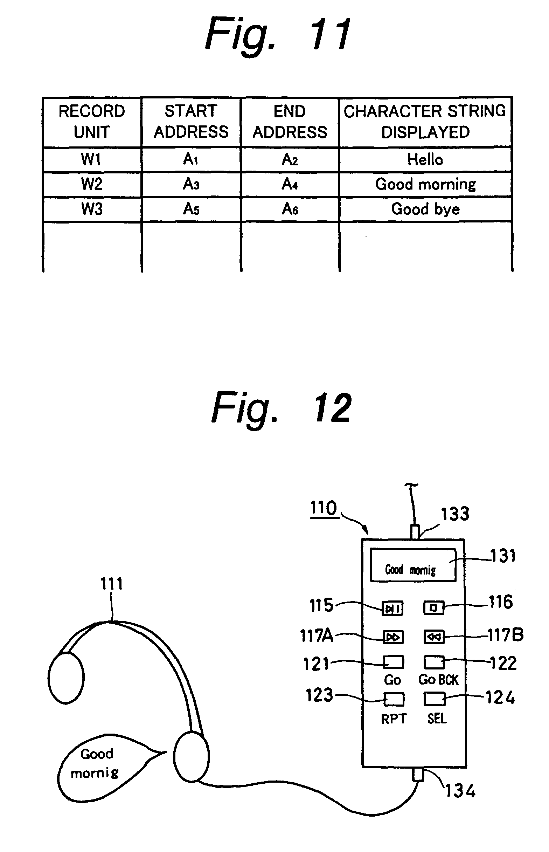

Fig. 11 is a table showing a start address, an end address, and display characters of each record unit of a program;
Fig. 12 is an external view showing another example of the structure of the remote controlling apparatus according to the first embodiment of the present invention;
Fig. 13A is a schematic diagram showing an audio signal recorded to record units of a program according to a second embodiment of the present invention;
Fig. 13B is a schematic diagram showing a cue signal recorded to record units of a program according to the second embodiment of the present invention;
Fig. 14 is a block diagram showing the structure of a remote controlling apparatus according to the second embodiment and a third embodiment of the present invention;
Fig. 15A is a schematic diagram showing questions and answers recorded to record units of a program according to the third embodiment of the present invention;
Fig. 15B is a schematic diagram showing a control signal recorded to record units of a program according to the third embodiment of the present invention;
Fig. 16 is a flow chart for explaining an automatic correcting function according to the third embodiment of the present invention;
Fig. 17 is a block diagram showing another example of the structure of a remote controlling apparatus according to the third embodiment of the present invention;
Fig. 18 is a block diagram showing another example of the structure of a remote controlling apparatus according to the third embodiment of the present invention; and
Fig. 19 is a block diagram showing another example of a detecting circuit for a cue signal recorded on a record medium.

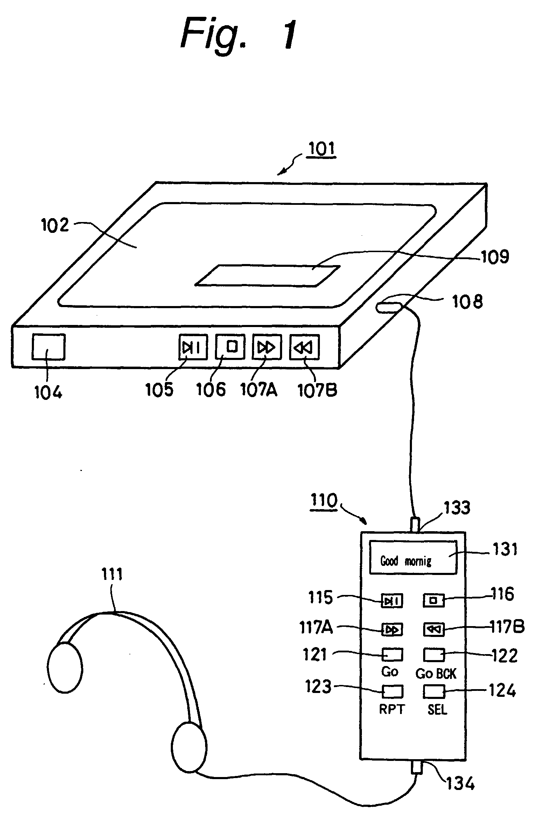

Next, with reference to the accompanying drawings, a first embodiment of the present invention will be described. Fig. 1 is a schematic diagram showing the overall structure of a language learning system using an MD according to the first embodiment of the present invention. In Fig. 1, a disc reproducing apparatus main unit 101 has a lid 102 that can be opened and closed. A disc is loaded inside the lid 102.

The disc loaded to the disc reproducing apparatus main unit 101 is named MD that is an optical disc or an optical-magnetic disc whose diameter is 64 mm and that is encased in a cartridge. The MD has U-TOC as a management area formed in the inner periphery thereof. As will be described later, the start address and the end address of a program are recorded in U-TOC. When the disc is loaded to the disc reproducing apparatus main unit 101, information of U-TOC is read. With the information of U-TOC, programs recorded on the disc are managed.

In the system according to the present invention, a language learning disc can be used. The language learning disc is similar to a conventional MD. In the language learning disc, one program managed with U-TOC is divided into a plurality of record areas. A cue signal is recorded at the start position and the end position of each of the divided record areas. The cue signal is a signal with a frequency of for example 20 kHz that is inaudible by ears of users. The cue signal is recorded on one of the left and right channels (for example, on the right channel). A language learning audio signal of each word and each sentence is recorded to each record area divided with the cue signal.

For example, an audio signal corresponding to a pronunciation of a sentence "This is a pen." is recorded on the left channel. A signal with a frequency of 20 kHz is recorded as a cue signal just before "This" as the start position of the sentence on the right channel. In addition, a signal with a frequency of 20 kHz is recorded as a cue signal just after "pen" as the end position of the sentence on the right channel.

The disc reproducing apparatus main unit 101 has a power key 104, a playback and pause key 105, a stop key 106, and FF and REW keys 107A and 107B. A headphone terminal 108 is disposed on a side of the disc reproducing apparatus main unit 1. A remote controlling apparatus 110 is connected to the headphone terminal 108.

The remote controlling apparatus 110 is a handy unit that allows the user to operate the disc reproducing apparatus main unit 101. The remote controlling apparatus 110 has a playback and pause key 115, a stop key 116, and FF and REW keys 117A and 117B.

In addition, the remote controlling apparatus 110 according to the present invention has a GO key 121, a GO backward key 122, a repeat key 123, and a function change key 124 with which the user can conveniently learn a language. The GO key 121 and the GO backward key 122 are used to access a desired word or sentence. The GO key 121 is used to forwardly access a desired word or sentence. The GO backward key 122 is used to backwardly access a desired word or sentence. The repeat key 123 is used to repeatedly reproduce the same word or sentence. The function change key 124 is used to select the word/sentence access function.

A liquid crystal display 131 is disposed on the upper surface of the remote controlling apparatus 110. The liquid crystal display 131 displays various setup states. In addition, connection terminals 133 and 134 are disposed on sides of the remote controlling apparatus 110. The connection terminal 133 is used to connect the remote controlling apparatus 110 and the disc reproducing apparatus main unit 101. The connection terminal 134 is used to connect the remote controlling apparatus 110 and headphones 111.

The disc reproducing apparatus main unit 101 can be operated with the power key 104, the playback and pause key 105, the stop key 106, and the FF and REW keys 107A and 107B disposed thereon.

As shown in Fig. 1, the headphone terminal 108 of the disc reproducing apparatus main unit 101 and the connection terminal 133 of the remote controlling apparatus 110 are connected. When the headphone connection terminal 134 of the remote controlling apparatus 110 and the headphones 111 are connected, the disc reproducing apparatus main unit 101 can be operated with the remote controlling apparatus 110. In other words, when the headphone terminal 108 of the disc reproducing apparatus main unit 101 and the connection terminal 133 of the remote controlling apparatus 110 are connected, the disc reproducing apparatus main unit 101 can be operated with the playback and pause key 115, the stop key 116, the FF and REW keys 117A and 117B on the remote controlling apparatus 110.

When the remote controlling apparatus 110 is connected to the disc reproducing apparatus main unit 101, each word or sentence can be accessed with the GO key 121, the GO backward key 122, the repeat key 123, and so forth for learning a language.

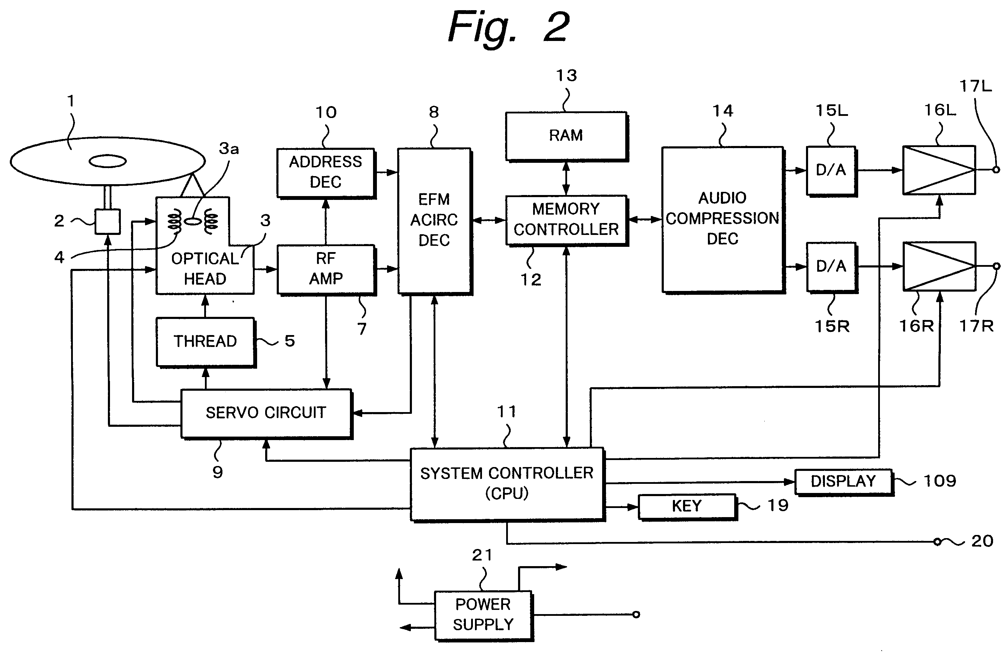

Fig. 2 is a block diagram showing the structure of the disc reproducing apparatus main unit 101 according to the present invention. In Fig. 2, reference numeral 1 is a disc. The disc 1 is rotated and driven by a spindle motor 2.

The disc 1 has U-TOC (User Table of Contents) on the inner periphery thereof. U-TOC is used to manage user data. Sector 0 of U-TOC has basic information and start/end addresses of each program. Sector 1 of U-TOC has character information of for example a disc name or a track name.

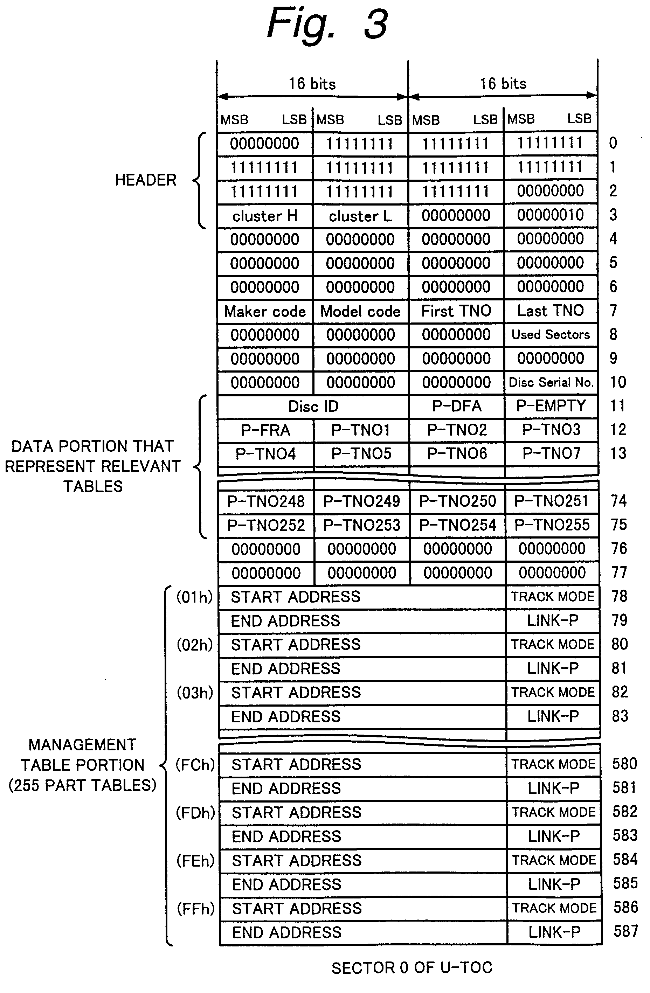

Fig. 3 shows the structure of sector 0 of U-TOC. As shown in Fig. 3, sector 0 of U-TOC has a header with a predetermined bit pattern at the beginning thereof. The header is followed by a maker code (Maker Code), a model code (Model Code), a first program number (First TNO), a last program number (Last TNO), a sector use situation (Used Sectors), a disc serial number (Disc Serial No.), a disc ID (Disc ID), and so forth.

In addition, U-TOC has various table pointers that point information of program areas and free areas. In the program areas, programs recorded by the user are recorded. A start address, an end address, and mode information (track mode) of a relevant part are recorded at the position pointed by a table pointer. A part represented with a part table may be connected to another part. Thus, link information (Link-P) that represents the position of a part table that has the start address and the end address of a part to be connected is recorded.

A table pointer P-DFA (Pointer for Defective Area) is a pointer that represents the position of a part table at the beginning of the next defect area in the case that the disc has a defect area. In other words, when there is a defect part, a part table pointed by the table pointer P-DFA represents the start address and the end address of the defect portion. In addition, when there is another defect part, the position of the part table thereof is represented with the link information. When here is no further defect part, the link information is for example (00h: hexadecimal) that represents that there is no further link.

A table pointer P-EMPTY (Pointer for Empty slot) is a pointer that points the position of the beginning of part tables that have not been used. A part table pointed by the table pointer P-EMPTY represents the start address and the end address of an area that has not been used. When there are a plurality of part tables that have not been used, the positions of the part tables are represented with the link information. When there is no area that has not been used, the link information is for example (00h) that represents that there is no further link.

A table pointer P-FRA (Pointer for FReely Area) is a pointer that points the position of a part table at the beginning of a writable free area (including an erased area). When there are a plurality of such parts (namely, when there are a plurality of part tables), the link information successively represents the part tables. When there is no further free area, the link information is for example (00h) that represents that there is no further link.

Table pointers P-TNO1 to P-TNO255 are pointers that point positions of part tables at the beginning of individual programs recorded by the user. The table pointer P-TNO1 points the position of a part table that has the start address and the end address of data of a first music program. The table pointer P-TNO2 points the position of a part table that has the start address and the end address of data of a second music program. The table pointer P-TNO3 points the position of a part table that has the start address and the end address of data of a third music program. Data of one music program may be discontinuously recorded (namely, in a plurality of parts). When one music program is recorded in a plurality of parts, the link information successively represents the positions of part tables. When a music program is not continued to another part table, the link information is for example (00h) that represents no further link.

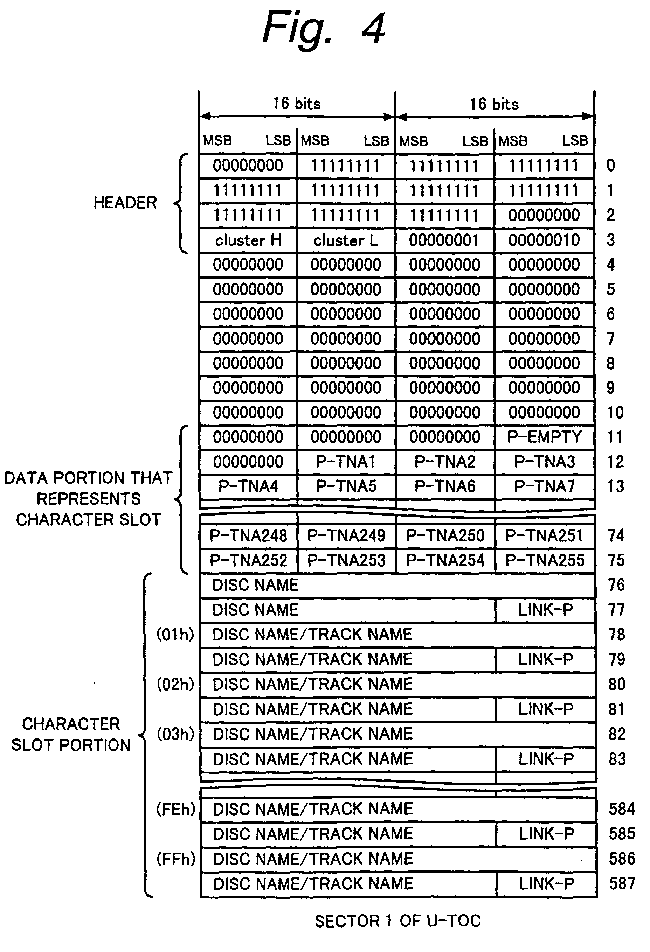

Fig. 4 shows the structure of sector 1 of U-TOC. Sector 1 of U-TOC is used to display names of recorded music programs and character information such as a disc title.

Sector 1 of U-TOC has slot pointers P-TNA1 to P-TNA255 as data portions that represent character slots corresponding to recorded music programs. Sector 1 also has a character slot portion pointed with the slot pointers P-TNA1 to P-TNA255. The character slot portion has 255 slots (01h) to (FFh) each of which is composed of eight bytes. The slots (01h) to (FFh) are used to manage character data in almost the same format as sector 1 of U-TOC.

The slots (01h) to (FFh) have character information as a disc title (disc name) and program names (track names) in ASCII codes (American Standard Code for Information Interchange). The slot (01h) is preceded by a disc name area of eight bytes.

A character string that is input by the user corresponding to the first music program is recorded in a slot pointed by the slot pointer P-TNA1. When slots are linked with link information, seven bytes (seven characters) or more can be input as a character string corresponding to one music program (track).

In sector 1 of U-TOC, the slot pointer P-EMPTY is used to manage slots that have not been used. In other words, with the table pointer P-EMPTY of sector 0 of U-TOC, slots that have not been used are managed as with the management method for part tables that have not been used.

In Fig. 2, an optical head 3 is disposed corresponding to the disc 1. The optical head 3 has a laser diode, an optical system, and a detector. The laser diode outputs laser light. The optical system is composed of a polarized beam splitter and an objective lens. The detector detects reflected light. The objective lens 3a is held by a two-axis device 4 so that the objective lens 3a can be moved in the radius direction and the approaching/departing direction of the disc. The optical head 3 is moved in the radius direction of the disc by a thread mechanism 5.

Information detected from the disc 1 by the optical head 3 is supplied to an RF amplifier 7. The RF amplifier 7 operates output signals of the individual detectors of the optical head 3 and supplies a reproduction RF signal, a tracking error signal, a focus error signal, absolute position information (recorded as wobbles), address information, and so forth. The reproduction RF signal is supplied to an EFM (Eight To Fourteen Modulation) and ACIRC (Advanced Cross Interleave Reed-Solomon code) decoder portion 8. The tracking error signal is supplied from the RF amplifier 7 to a servo circuit 9. The address information is supplied to an address decoder 10. The address decoder 10 decodes the address information and outputs it as an absolute position address.

The servo circuit 9 generates various servo drive signals corresponding to the tracking error signal, the focus error signal received from the RF amplifier 7, a track jump command and a seek command received from a system controller 11, rotation speed detected information received from the spindle motor 2, and so forth. Corresponding to the servo drive signals, the two-axis device 4 and the thread mechanism 5 are controlled so as to perform a focus control and a tracking control.

The entire operation of the system is managed by the system controller 11. The system controller 11 is operated with data that is input from an operation inputting portion 19. As shown in Fig. 1, the operation inputting portion 19 has the playback and pause key 105, the stop key 106, the FF key and REW keys 107A and 107B, and so forth.

An output signal of the system controller 11 is supplied to a display 109. The display 109 displays various setup states.

In the reproducing mode, a signal recorded on the disc 1 is reproduced by the optical head 3. An output signal of the optical head 3 is supplied to the RF amplifier 7. The RF amplifier 7 outputs a reproduction RF signal. The reproduction RF signal is supplied to the EFM and ACIRC decoder 8. The EFM and ACIRC decoder 8 performs EFM decoding process and ACIRC error correcting process for the reproduction RF signal.

An output signal of the EFM and ACIRC decoder 8 is temporarily written to a RAM 13 under the control of a memory controller 12. Data that is read from the optical-magnetic disc 1 by the optical head 3 and data that is supplied from the optical head 3 to the RAM 13 are intermittently transmitted at a bit rate of 1.41 Mbits/sec.

The data written to the RAM 13 is read at a bit rate of 0.3 Mbits/sec and supplied to an audio compression decoder 14. The audio compression decoder 14 performs ATRAC (Acoustic TRansfer Adapted Coding) expanding process for the audio data.

An output signal of the audio compression decoder 14 is supplied to D/A converters 15L and 15R. The D/A converters 15L and 15R convert digital audio signals on left and right channels into analog audio signals. The analog audio signals are supplied to output terminals 17L and 17R through amplifiers 16L and 16R, respectively. Gains of the amplifiers 16L and 16R are controlled by the controller 12. Thus, the levels of the audio signals are set.

Data is written to/from the RAM 13 in such a manner that the memory controller 12 controls a write pointer and a read pointer so as to assign an address of the RAM 13. The write pointer is incremented at 1.41 Mbits/sec. On the other hand, the read pointer is incremented at 0.3 Mbits/sec. Due to the difference between the bit rate of the write pointer and the bit rate of the read pointer, data remains in the RAM 13. When the RAM 13 fully stores data, the incrementing operation of the write pointer is stopped. In addition, the data read operation of the optical head 3 from the optical-magnetic disc 1 is also stopped. However, since the incrementing operation of the read pointer is not stopped, the reproduction audio signal is not stopped.

Thereafter, only the reading operation of the RAM 13 is continued. When the data amount stored in the RAM 13 becomes a predetermined amount or less, the data reading operation of the optical head 3 and the incrementing operation of the write pointer are resumed. Thus, data is stored in the RAM 13.

Since the reproduction audio signal is output through the RAM 13, even if an tracking error takes place due to a disturbance, the reproduction audio signal is not stopped. When data remains in the RAM 13, a correct track is accessed and data is read therefrom. Thus, the operation can be resumed without an influence of the reproduction data.

The disc reproducing apparatus main unit 101 has a power supply circuit 21. The power supply circuit 21 supplies a power to the disc reproducing apparatus main unit 101. In addition, the power of the power supply circuit 21 is output from a power supply output terminal 22 to the outside of the disc reproducing apparatus main unit 101.

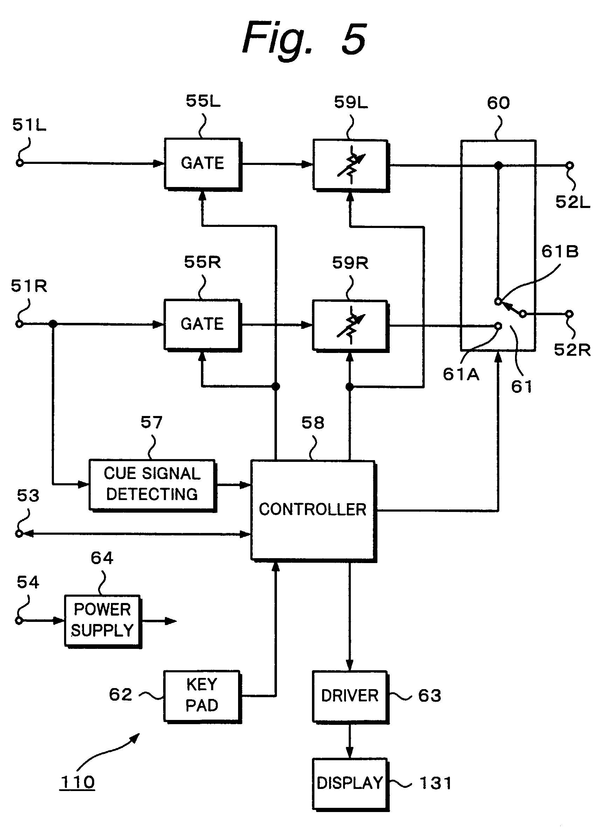

Fig. 5 shows the structure of the remote controlling apparatus 110 according to the first embodiment of the present invention. The remote controlling apparatus 110 has left and right channel analog audio signal input terminals 51L and 51R, left and right channel analog audio signal output terminals 52L and 52R, a control terminal 53, and a power supply input terminal 54.

The analog audio signals are supplied from the output terminals 17L and 17R of the disc reproducing apparatus main unit 101 to the analog audio signal input terminals 51L and 51R, respectively. The analog audio signals are supplied from the output terminals 52L and 52R to the headphones 111. The control terminal 53 is connected to the control terminal 22 of the disc reproducing apparatus main unit 101. In addition to various control signals, address information, title information, and so forth of recorded programs are exchanged between the control terminal 53 and the control terminal 20. The power supply input terminal 54 is connected to the power supply output terminal 22 of the disc reproducing apparatus main unit 101. The power is supplied from the disc reproducing apparatus main unit 101 to the power supply circuit 64 of the remote controlling apparatus 110.

The audio signals are supplied from the input terminals 51L and 51R to gate circuits 55L and 55R, respectively. The right channel audio signal is also supplied from the input terminal 51R to a cue signal detecting circuit 57.

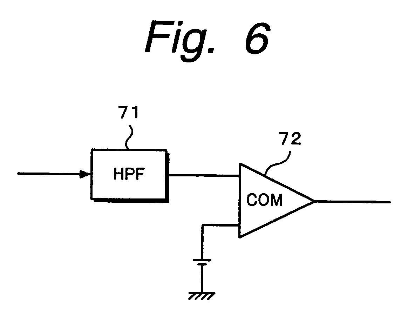

The cue signal detecting circuit 57 detects a cue signal from the right channel signal. As shown in Fig. 6, the cue signal detecting circuit 57 is composed of a high pass filter 71 and a comparator 72. The high pass filter 71 detects a signal component with a frequency of 20 kHz or more. The comparator 72 detects whether or not the signal level of the output signal of the high pass filter 7 is higher than a predetermined level. An output signal of the cue signal detecting circuit 57 is supplied to a controller 58.

When the cue signal is detected and the access process is performed, the gate circuits 55L and 55R mute the output signals. The gate circuits 55L and 55R are controlled by the controller 58. Output signals of the gate circuits 55L and 55R are supplied to electronic volume controlling circuit 59L and 59R, respectively.

The electronic volume controlling circuits 59L and 59R set up levels of output audio signals. The electronic volume controlling circuits 59L and 59R are controlled by the controller 58. When the cue signal is detected and the access process is performed, the levels of the audio signals that are output from the disc reproducing apparatus main unit 101 should be large so as to securely detect the cue signal. Thus, circuits that set up the audio levels should be disposed.

Output signals of the electronic volume controlling circuits 59L and 59R are supplied to a switch circuit 60. In the normal reproducing mode, the switch circuit 60 directly outputs left and right channel audio signals. However, when the word/sentence access function is operated in the language learning mode, the left channel audio signal is output from the left and right channel analog audio signal output terminals 52L and 52R.

In other words, on a language learning disc, only the cue signal has been recorded on the right channel. Thus, when the output signals of the electronic volume controlling circuits 59L and 59R are directly supplied, the cue signal is output from the right channel. Since the cue signal is a signal with a frequency in an inaudible frequency band, the user cannot hear it. However, in this case, no audio signal is output from the right channel. Thus, when the word/sentence access function is operated in the language learning mode, the switch 60 is placed on the terminal 61B side. Thus, audio signals are output from the left and right channels.

A signal is supplied from an input key pad 62 to the controller 58. The input key pad 62 has the playback and pause key 115, the stop key 116, the FF and REW keys 117A and 117B that allow the user to set up the operation of the disc reproducing apparatus main unit 101. In addition, the input key pad 62 includes the GO key 121, the GO backward key 122, the repeat key 123, the function on/off key 124, and so forth that allow the user to perform the word/sentence access function for learning a language. An output signal of the controller 58 is supplied to a display 131 through a driver 63.

As shown in Fig. 3, in an MD, programs recorded thereon are managed with U-TOC. The maximum number of programs managed with U-TOC is 255 as P-TNO1 to P-TNO255. However, in the language learning mode, the word/sentence access function is required. In this case, the maximum number of programs that is 255 is insufficient.

Thus, in the system according to the present invention, each program is divided into a plurality of record units. The cue signal is recorded to each record unit. With the cue signal, more than 255 programs can be managed. With the GO key 121, the GO backward key 122, and the repeat key 123, the user can access each word or sentence so as to learn a language.

The remote controlling apparatus 110 has a cue signal detecting circuit 57 that detects the cue signal with a frequency of for example 20 kHz. The cue signal detecting circuit 57 detects the cue signal and detects the start position and end position of each word or sentence.

When the user operates the GO key, the GO backward key 122, and the repeat key 123, the start position and the end position of each word or sentence is detected corresponding to the cue signal and thereby the word or sentence is reproduced. Thus, the user can access each word or sentence to learn a language.

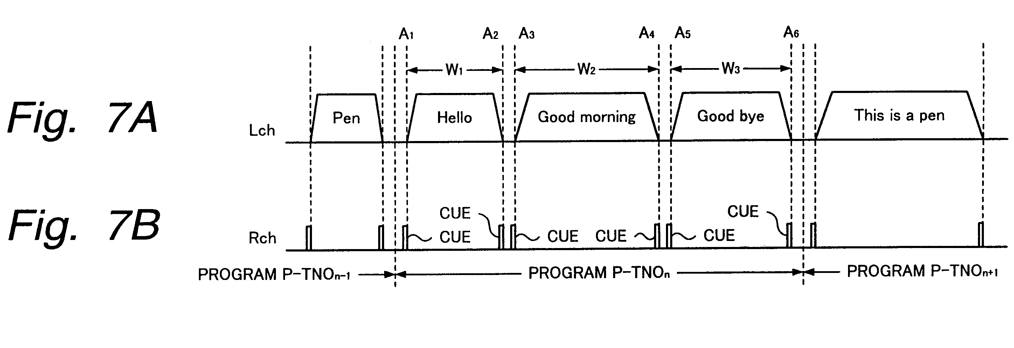

For example, as shown in Fig. 7, it is assumed that an n-th program P-TNOₙ managed with U-TOC has been divided into record units W1, W2, and W3 and that audio data "Hello", "Good morning", and "Goodby" have been recorded to the record units W1, W2, and W3, respectively.

In this case, as shown in Fig. 7A, on the left channel, audio data "Hello", "Good morning", and "Good by" have been recorded in the program P-TNOₙ. On the right channel, the cue signal CUE has been recorded at the start position A1 and the end position A2 of the record unit W1 "Hello". The cue signal CUE has been recorded at the start position A3 and the end position A4 of the record unit W2 "Good morning". The cue signal CUE has been recorded at the start position A5 and the end position A6 of the record unit W3 "Good by".

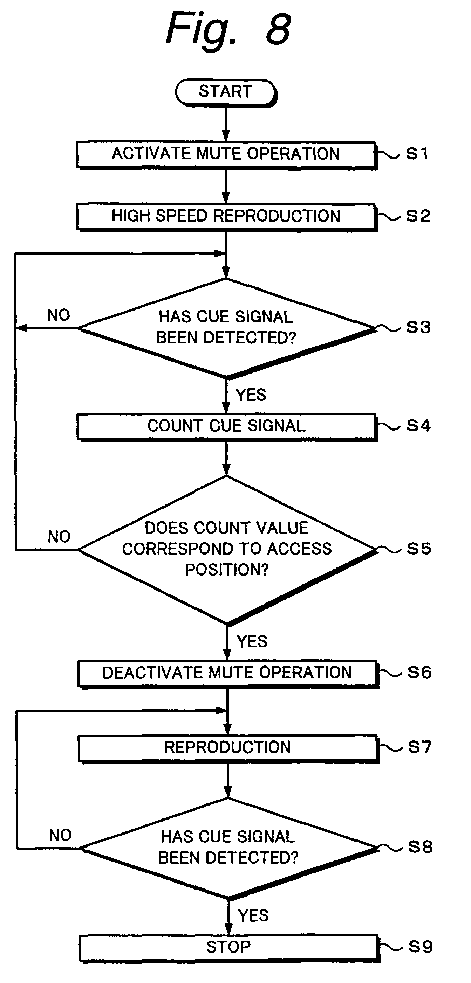

With U-TOC, the program P-TNOₙ is accessed. Thereafter, with the cue signal CUE recorded at the start/end positions of the record units W1, W2, and W3 of the program P-TNOₙ, a process corresponding to a flow chart shown in Fig. 8 is performed. Thus, the desired record units are accessed and reproduced.

Fig. 8 shows the process in the case that the record units W1, W2, and W3 of the program P-TNOₙ are accessed and reproduced. In Fig. 8, when desired record units are accessed and reproduced, the mute operation for the audio output signals are activated so as to prevent reproduced audio signals from being output (at step S1). The program P-TNOₙ is reproduced at high speed from the beginning thereof (at step S2). Thereafter, it is determined whether or not the cue signal has been detected (at step S3).

When the cue signal has been detected, the cue signal is counted (at step S4). Thereafter, it is determined whether or not the count value of the cue signal has become a predetermined count value corresponding to the access position (at step S5). When the count value does not become the predetermined count value, the flow returns to step S3. At step S3, the cue signal is continuously counted.

When the determined result at step S5 is Yes (namely, the count value of the cue signal has become the predetermined count value corresponding to the access position), the mute operation is deactivated (at step S6). From this position, the reproducing operation is started fat step S7). While the reproducing operation is being continued, it is determined whether or not the cue signal has been detected (at step S8). When the cue signal has been detected, the reproducing operation is stopped (at step S9).

It is assumed that the record unit W2 "Good morning" of the program P-TNOₙ shown in Fig. 7 is accessed and reproduced. In this case, with U-TOC, the beginning of the program P-TNOₙ is accessed. Thereafter, the program is reproduced at high speed. Next, it is determined whether or not the count value of the cue signal CUE has become a predetermined count value.

In this case, since the record unit W2 is accessed, it is determined wether or not the count value of the cue signal CUE has become "3". When the count value of the cue signal CUE has become "3", the beginning of the record unit W2 is accessed at the address A3. When the count value of the cue signal CUE has become "3", the reproducing operation is started from the address A3. Next, it is determined whether or not the cue signal CUE has been detected. When the cue signal CUE has been detected, the reproducing operation is stopped. Thus, the record unit W2 "Good morning" is reproduced.

In the system according to the present invention, the user can access each word or sentence so as to learn a language. With the cue signal recorded on the right channel, each word or sentence is accessed. In other words, since U-TOC is not changed, a conventional disc reproducing apparatus can be used without any modification.

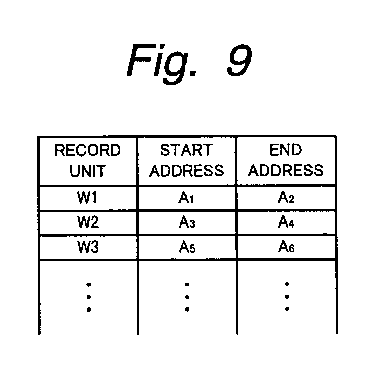

In the example shown in Fig 8, while the cue signal is being detected, a desired record unit is accessed. Instead, a memory that stores the relation between record unit numbers and addresses can be disposed. A program P-TNOₙ is reproduced and the cue signal is detected. The addresses of the positions of the cue signal are stored in the memory. As shown in Fig. 9, a table that represents the relation among record unit numbers and start/end addresses thereof is created. Corresponding to this table, a record unit corresponding to a desired word or sentence can be directly accessed and reproduced.

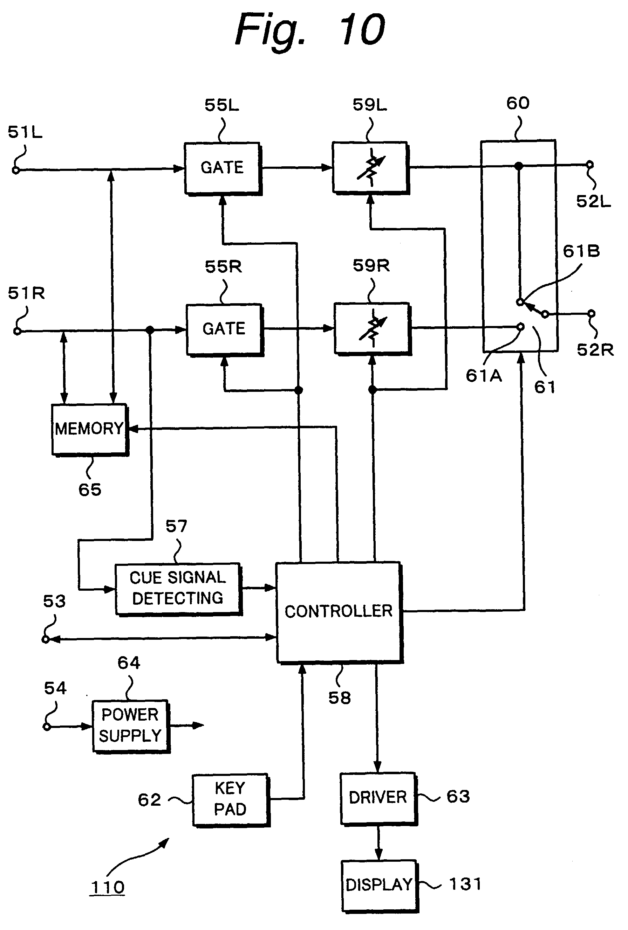

In addition, as shown in Fig. 10, a memory 65 may be disposed in the remote controlling apparatus 110. A reproduction audio signal that is output from the disc reproducing apparatus main unit 101 is stored in the memory 65. Thus, the user can learn a language only with the remote controlling apparatus 110.

In this case, when a reproduction signal of the disc reproducing apparatus 101 is stored in the memory 65, the cue signal is detected. An address corresponding to the cue signal is stored. A table that represents the relation among record unit numbers and start/end addresses thereof is created. In the reproducing mode, with reference to the table, a record unit of a desired word or sentence can be directly accessed and reproduced.

In addition, as described above, a disc name and a track name can be recorded to sector 1 of U-TOC. With a disc name and a track name recorded in U-TOC, characters of a word or sentence can be displayed. In this case, while seeing characters displayed on the display 131, the user can learn a language with his or her eyes and ears.

A disc name and a track name can be recorded in sector 1 of U-TOC of the MD as shown in Fig. 4. When "Hello", "Good morning", and "Good by" are recorded in the program P-TNOₙ as shown in Fig. 7, "Hello#Good morning#Good by" is recorded as the name of the program P-TNOn. In this case, "#" is a division symbol. When character information of phrases of the program P-TNOₙ is connected with a division symbol "#", character information of each record unit is recorded.

In other words, in "Hello#Good morning#Good by", the first character information "Hello" divided with the first "#" is character information corresponding to the record unit W1. The second character information "Good morning" divided with the first "#" and the second "#" is character information corresponding to the record unit W2. The last character information "Good by" divided with the second "#" is character information corresponding to the record unit W3.

The division symbol is not limited to "#". Instead, a character or a symbol that is not often used may be used as the division symbol.

In the case that a disc name and a track name have been recorded in sector 1 of U-TOC, when the disc is loaded to the apparatus, information is read from sector 1 of U-TOC. Corresponding to the information, a table that represents the relation between record unit numbers and character information is created.

In the example, a table that represents the relation among record unit numbers and start/end addresses thereof is also created. As described above, the table is created in such a manner that the program is reproduced at high speed and the cue signal is detected beforehand. When a desired record unit is reproduced, character information corresponding thereto is read from the table and displayed on the display 131.

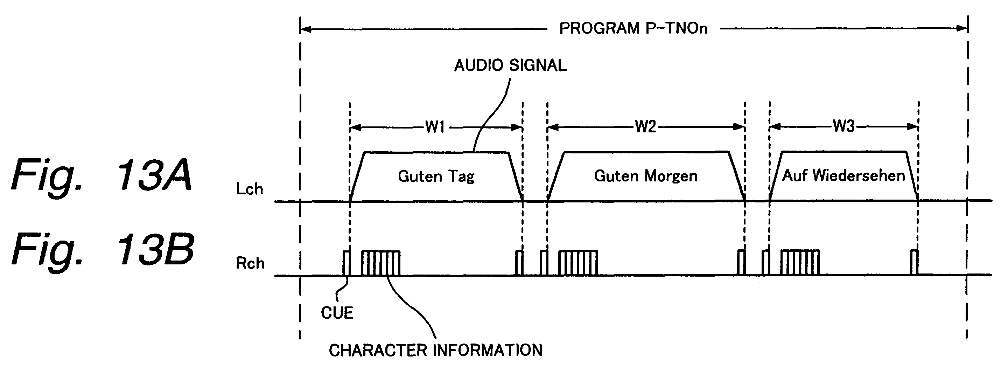

In other words, when the phrase W2 of the program P-TNOₙ shown in Fig. 7 is accessed and reproduced, a character string "Good morning" is displayed on the display 131 as shown in Fig. 12. The audio data "Good morning" of the record unit W2 is reproduced by the headphones 111.

In the method for displaying characters of a word or sentence using a disc name and a track name or U-TOC, although the conventional disc reproducing apparatus can be directly used, character information that is displayed is limited to alphanumeric characters recorded as ASCII codes. In addition, characters of a word or sentence that can be displayed are limited to each track. To solve such a problem, character information or control signal as an audio signal is recorded along with a cue signal to a record medium such as an MD. Thus, the usefulness of the system is further improved. This structure will be described as a second embodiment of the present invention.

As the second embodiment, character information as an audio signal is recorded between cue signals on an MD. As shown in Fig. 13A, on the left channel, a program P-TNOₙ is divided into record units W1, W2, and W3. Audio signals as language learning data are recorded to the record units W1, W2, and W3. Assuming that a learning language is German, audio signals of "guten Tag", "guten Morgen", and "auf Wiedersehen" are recorded.

As shown in Fig. 13B, the cue signal is recorded at the start position and the end position of each of the record units W1, W2, and W3. Character information as an audio signal is recorded between the cue signals. In the above-described example, character information corresponding to audio signals of "guten Tag", "guten Morgen", and "auf Wiedersehen" are recorded with predetermined character codes. Character information recorded between the cue signals may be Japanese, French, Spanish, Russian, or Chinese rather than English and German.

Character information is converted into an audio signal by frequency modulation (for example, Frequency Shift Keying: FSK) or phase modulation (for example, Phase Shift Keying: PSK). In the FSK modulation, frequencies are assigned to digital signals for 0 and 1. By alternating these frequencies, signals 0/1 are transmitted. The FSK-modulated character information is modulated to audio data by ATRAC method or the like and then written to a disc. Alternatively, character information may be directly recorded to an inaudible band without the ATRAC modulation.

Assuming that the transmission rate of the modem is 9600 bits/sec and the period of character information is one second, as the record capacity of the character information, 1200 alphanumeric characters can be recorded as one-byte characters.

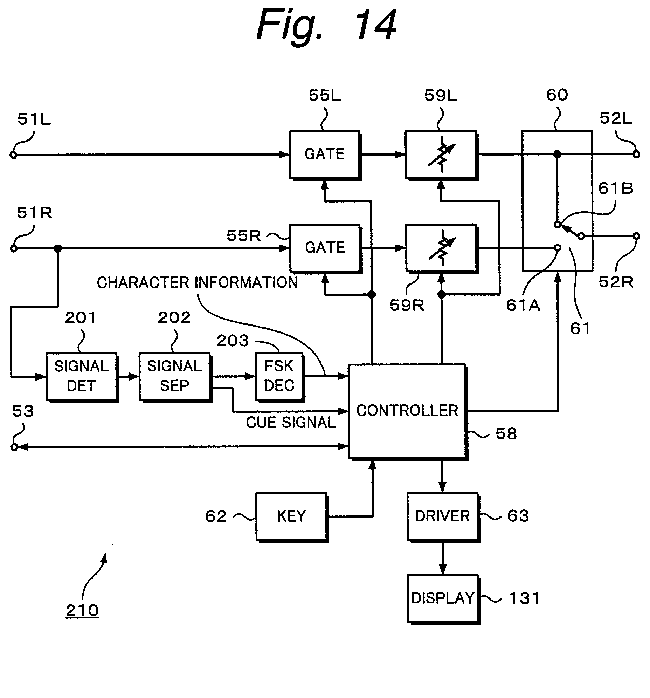

In the reproducing system according to the second embodiment, the disc reproducing apparatus main unit 101 shown in Fig. 1 and a remote controlling apparatus 210 shown in Fig. 14 are used. In Figs. 1 and 14, similar portions to those in Figs. 2 and 5 are denoted by similar reference numerals and their descriptions will be omitted.

In Fig. 14, an audio signal is received from an input terminal 51R disposed on the right of the remote controlling apparatus 210. The audio signal is supplied to a signal detecting circuit 201. The signal detecting circuit 201 detects a cue signal and character information as an audio signal from the received audio signal. A signal separating circuit 202 connected to the signal detecting circuit 201 separates the cue signal from the character information as an audio signal. The separated cue signal is supplied to a controller 58. The controller 58 controls the disc reproducing apparatus main unit 101 and the remote controlling apparatus 210 corresponding to the cue signal.

The separated character information as an audio signal is supplied to an FSK decoder 203. The FSK decoder 203 demodulates the character information as an audio signal and supplies the demodulated character information to the controller 58. The controller 58 supplies the demodulated character information to a driver 63. The driver 63 converts the received character information into display information and supplies the display information to a display 131. The display 131 displays the received display information. Thus, the audio signals of "guten Tag", "guten Morgen", and "auf Wiedersehen" of the record units are reproduced from headphones 111. In addition, the character information corresponding to the audio signals is displayed on the display 131. Consequently, character information corresponding to a word or sentence recorded to each record unit can be recorded without restrictions of character format and track unit.

Next, as a third embodiment of the present invention, a control signal as an audio signal is recorded between cue signals. The control signal is converted into an audio signal by the FK modulation, PSK modulation, or the like as with the second embodiment.

In the reproducing system according to the third embodiment, the disc reproducing apparatus main unit 101 shown in Fig. 1 and the remote controlling apparatus 210 shown in Fig. 14 are used. A control signal is detected by a detecting circuit (not shown). The detected control signal is processed by a controller 58. The control signal includes control signals for disc control operations such as a disc playback operation, a pause operation, an FF operation, and an REW operation, and control signals for the remote controlling apparatus 210.

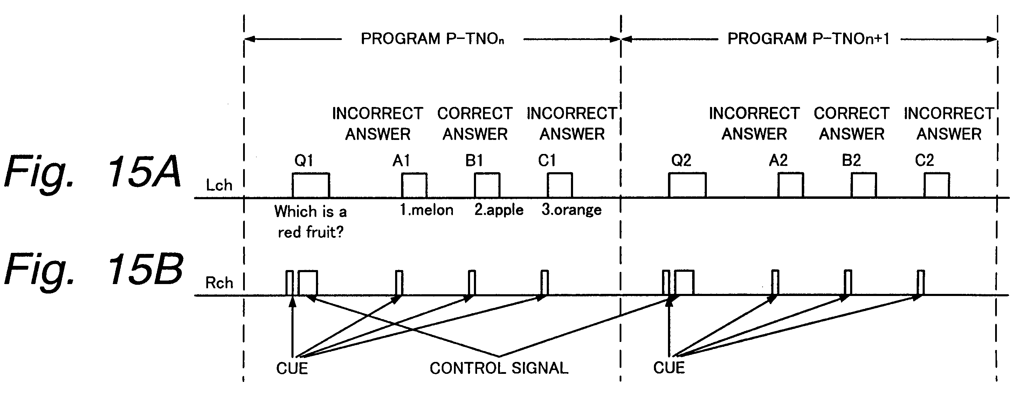

Next, as an example of a new function accomplished by the third embodiment of the present invention, an automatic correcting function will be described. As shown in Fig. 15A, on the left channel of a disc for accomplishing the automatic correcting function, a program P-TNOₙ is divided into record units Q1, A1, B1, and C1. As a first question, "Which is a red fruit ?" is recorded to the record unit Q1. As examples of an answer to the first question, audio signals "1. melon", "2. apple", and "3. orange" are recorded to the record units A1, B1, and C1, respectively. The user can learn a language in a quiz format.

As shown in Fig. 15B, on the right channel, the cue signal CUE is recorded at the start position of each of the record units Q1,A1, B1, and C1. A control signal as an audio signal is recorded after the cue signal CUE. As data of a control signal in this embodiment, the number of answers, the number of correct answer, and control programs of the reproducing system in the correct answer state and the incorrect answer state. Likewise, on the left channel, a program P-TNOₙ₊₁ is divided into record units Q2, A2, B2, and C2. In the record units Q2, A2, B2, and C2, a second question and examples of an answer thereto are recorded. A control signal as an audio signal is recorded after the first cue signal CUE on the right channel.

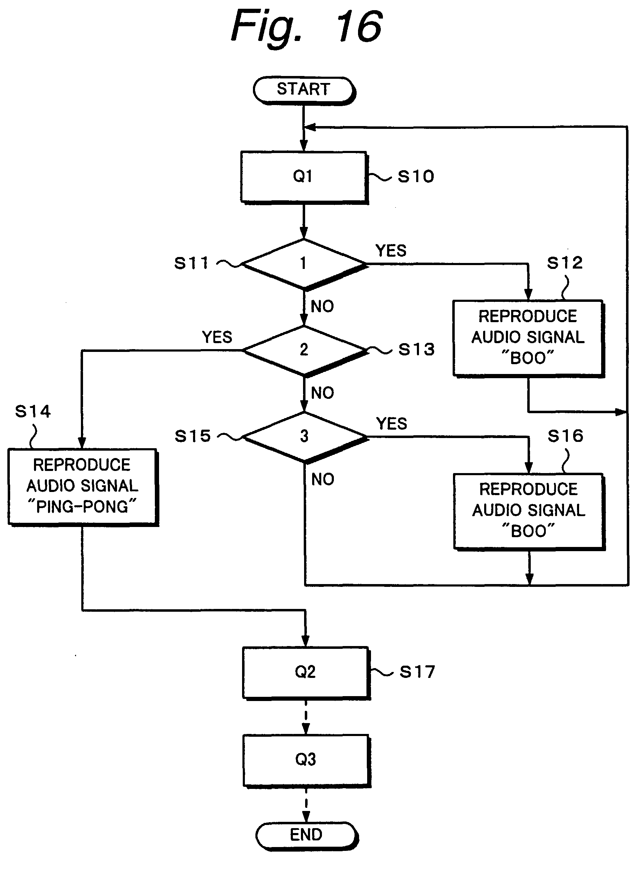

In the third embodiment, the automatic correcting function is executed as follows. First, the program number P-TNOₙ is accessed with U-TOC. Next, a process shown in Fig. 16 is performed and the automatic correcting function is accessed with the cue signal CUE recorded at the start positions of the record units Q1, A1, B1, and C1 or the program P-TNOₙ.

In Fig. 16, the audio signal of "Which is a red fruit ?" of the record unit Q1 as the first question is reproduced. Thereafter, the audio signals of "1. melon", "2. apple", and "3. orange" of the record units A1, B1, and C1 are reproduced. Until the user inputs his/her answer, the process temporarily stops (at step S10). The user inputs his/her answer with an operation key of the remote controlling apparatus 110 shown in Fig. 1 or a ten key pad separately provided. A memory (not shown) of the controller 58 stores audio signals "ping-pong" and "boo" that inform the user that his/her answer is correct and incorrect, respectively.

When the user inputs "1", the flow advances to step S11. At step S11, it is determined whether or not "1" is input. When the determined result at step S11 is Yes, the flow advances to step S12. When the determined result at step S11 is No, the flow advances to step S13. At step S12, an audio signal "boo" is generated. Thus, the user is informed that the his/her answer is incorrect. Thereafter the flow returns to step S10. At this point, the start position of the record unit Q1 of the disc is accessed. At step S10, the audio signals of the record units Q1, A1, B1, and C1 are reproduced. Thereafter, the process temporarily stops.

When the user inputs "2", the flow advances to step S13. At step S13, it is determined whether or not "2" is input. When the determined result at step S13 is Yes, the flow advances to step S14. When the determined result at step S13 is No, an audio signal "Ping-Pone" is generated. Thus, the user is informed that his/her answer is correct. Thereafter, the flow advances to step S17. At step S17, the record unit Q2 is accessed as a second question.

When the user inputs "3", the flow advances to step S15. At step S15, it is determined whether "3" is input. When the determined result at step S15 is Yes, the flow advances to step S16. When the determined result at step S15 is No, the flow returns to step S10. At step S16, an audio signal "Boo" is generated. Thus, the user is informed that his/her answer is incorrect. Thereafter, the flow returns to step S10. Next, the operations of the record unit Q2 and so forth are controlled. After the last record unit is controlled, the automatic correcting function is completed. As the automatic correcting function, text with pictures may be prepared so that the user can select a number corresponding to the question Q1 with pictures.

When character information corresponding to record units Q1, A1, B1, and C1 of the program is recorded as audio signals as with the second embodiment, in addition to the audio signals of the record units Q1, A1, B1, and C1, character information corresponding to the audio signals can be displayed on the display 131.

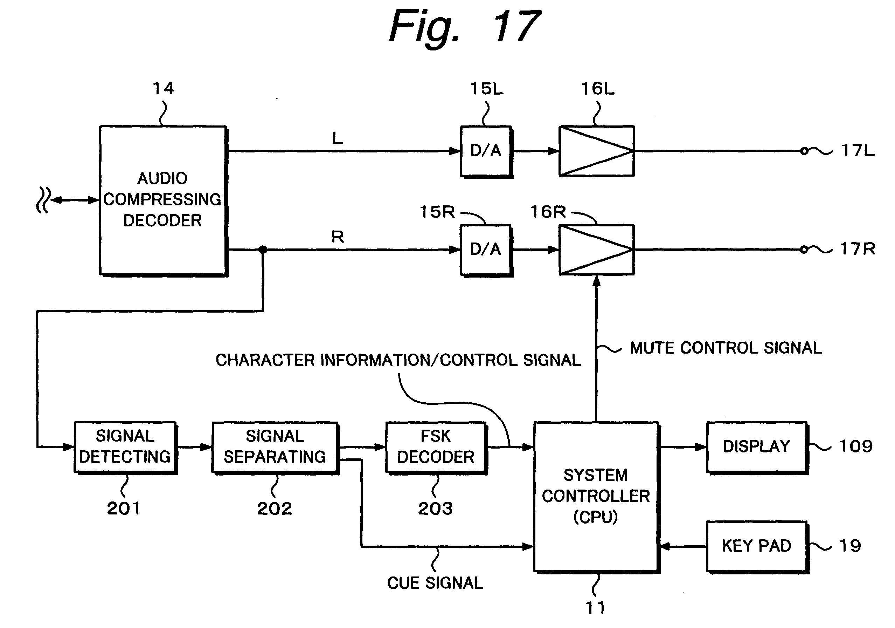

In the second and third embodiments, as shown in Fig. 17, the processes can be digitally performed. In other words, as shown in Fig. 17, an audio signal supplied to an audio compressing decoder 14 is decompressed by the ATRAC method.

An output signal of the audio compressing decoder 14 is supplied to D/A converters 15L and 15R. The D/A converters 15L and 15R convert digital audio signals of left and right channels into analog audio signals. The resultant analog audio signals are supplied to output terminals 17L and 17R through amplifiers 16L and 16R, respectively.

The right-channel output signal of the audio compressing decoder 14 is supplied to a signal detecting circuit 201. The signal detecting circuit 201 detects a cue signal, character information as an audio signal, and a control signal from the input audio signal. A signal separating circuit 202 is connected to the signal detecting circuit 201. The signal separating circuit 202 separates the cue signal from the character information and the control signal. The cue signal separated by the signal separating circuit 202 is supplied to a system controller 11. The system controller 11 controls the disc reproducing apparatus main unit 101.

The character information and control signal separated by the signal separating circuit 202 are supplied to an FSK decoder 203. The FSK decoder 203 demodulates the character information and control signal and supplies the demodulated character information and control signal to the system controller 11. The system controller 11 causes the demodulated character information to be displayed on the display 109. In addition, the system controller 11 controls the reproducing operation of the disc corresponding to the control signal. The system controller 11 outputs a mute control signal that prevents text information and the control signal from being mixed with the audio signal on the right channel.

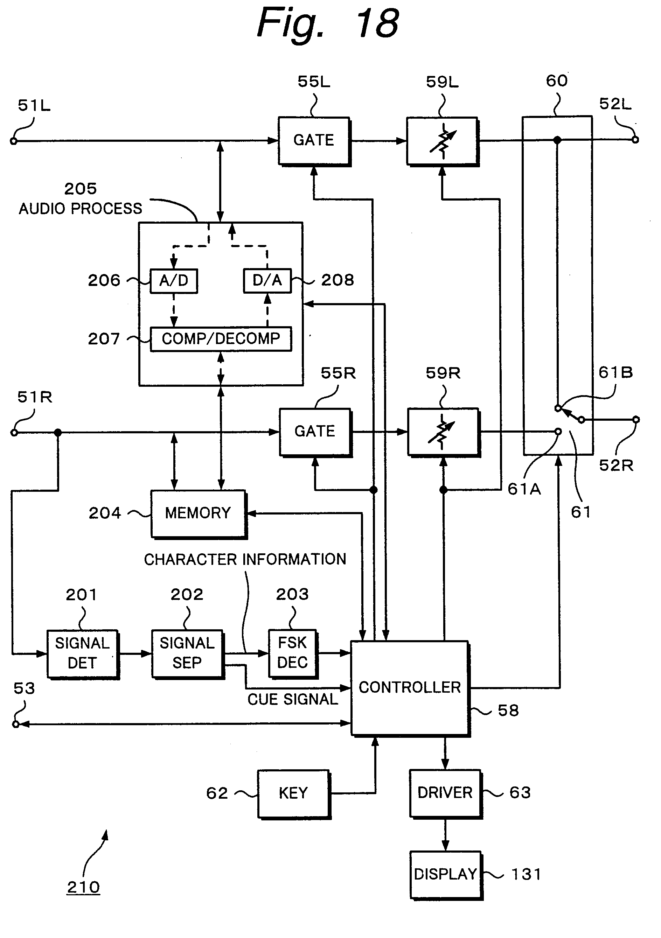

In the second and third embodiments of the present invention, as shown in Fig. 18, an audio signal received from the disc reproducing apparatus main unit 101 is supplied to an audio processing circuit 205 of a remote controlling apparatus 210. The audio processing circuit 205 processes the audio signal and stores the resultant signal to a memory 204. Thus, a portable learning system can be accomplished.

In other words, in the signal write mode to the memory 204, an audio signal received from an input terminal 51L is supplied to an A/D converter 206. The A/D converter 206 converts the input analog audio signal into a digital audio signal and supplies the resultant signal to an audio compressing encoder/decompressing decoder 207. The audio compressing encoder/decompressing decoder 207 compresses the digital audio signal and stores the resultant signal to the memory 204.

In the signal read mode from the memory 204, a digital audio signal is read from a predetermined address of the memory 204. The digital audio signal is supplied to the audio compressing decoder/decompressing decoder 207. The audio compressing encoder/decompressing decoder 207 decompresses the digital audio signal and supplies the resultant signal to a D/A converter 208. The D/A converter 208 converts the digital audio signal into an analog audio signal. The analog audio signal is supplied to a gate circuit 55L. Thereafter, the above-described operation is performed. For simplicity, the description of the operation is omitted.

After storing character information as an audio signal to the memory 204, the user uses only the remote controlling apparatus 210. Thus, a portable learning system that displays character information corresponding to an audio signal for a word or sentence that is reproduced can be accomplished.

When the control signal according to the third embodiment is used to control the remote controlling apparatus 210 and the memory 204, a portable learning system having an automatic correcting function can be accomplished. The control signal may be used in common with the cue signal.

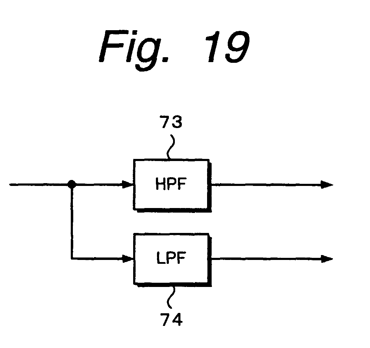

In the above-described example, the cue signal is recorded on the right channel. Alternatively, the cue signal may be recorded on the left channel. In the above-described example, an audio signal is not recorded on the right channel. However, since the cue signal is an inaudible frequency signal, the frequency of the audio signal and the frequency of the cue signal can be separated. Thus, the cue signal and the audio signal can be superimposed and separated with a high pass filter 73 and a band pass filter 74 as shown in Fig. 19.

In addition, the cue signal may be composed as a pulse sequence. The cue signal may have information by pulse width modulation (PWM) of which the pulse width of the cue signal is varied.

According to the present invention, one program managed with U-TOC is divided into a plurality of record units. A cue signal is recorded to each record unit. An audio signal of for example a word or sentence in a short period is recorded to each record unit. With the cue signal, programs that exceeds the maximum number managed with U-TOC can be handled. Thus, an audio signal of for example a word or sentence in a short period can be accessed and reproduced.

Since a signal with a frequency in an inaudible frequency band is used as the cue signal, it can be easily detected. In addition, it is not necessary to change the existing recording format. Moreover, the compatibility with the conventional system can be maintained.

According to the first embodiment of the present invention, character information of one program recorded in sector 1 of U-TOC is composed of a plurality of record units that are connected with a predetermined division symbol. With the division symbol, character information that exceeds the maximum number of programs managed with U-TOC can be handled. Thus, an audio signal of for example a word or sentence in a short period can be accessed and reproduced. In addition, the character information can be displayed.

According to the second embodiment of the present invention, one program managed with U-TOC is divided into a plurality of record units. The cue signal is recorded to each record unit. Character information as an audio signal is recorded between the cue signals. Since character information as an audio signal is recorded between the cue signals, programs that exceed the maximum number managed with U-TOC can be handled. In addition, character information corresponding to a words or sentence can be displayed regardless of character format and track unit.

According to the third embodiment of the present invention, one program managed with U-TOC is divided into a plurality of record units. The cue signal is recorded to each record unit. Character information as an audio signal is recorded between the cue signals. Since character information as an audio signal is recorded between the cue signals, for example, an automatic correcting function that automatically corrects an answer to a question that is set to each record unit can be provided.

In addition, with the remote controlling apparatus according to the present invention, a reproducing apparatus that reproduces data from a first record medium on which audio signals of at least two channels are recorded and a second record medium on which each program managed with U-TOC is divided into a plurality of record units and a cue signal is recorded for each record unit can be controlled. In other words, the remote controlling apparatus according to the present invention detects a cue signal and controls the reproducing apparatus corresponding to the detected result of the cue signal. Thus, with the remote controlling apparatus, the reproducing apparatus that reproduces a signal from a conventional record medium and a record medium on which a cue signal is recorded can be controlled.

The remote controlling apparatus has a memory. Audio information and character information as an audio signal are temporarily stored in the memory. Thus, with only the remote controlling apparatus, an audio signal for a word or sentence can be reproduced. In addition, character information corresponding an audio signal can be displayed. Thus, a portable reproducing system that displays character information corresponding to an audio signal can be accomplished.

Although the present invention has been shown and described with respect to preferred embodiments thereof, it should be understood by those skilled in the art that the foregoing and various other changes, omissions, and additions in the form and detail thereof may be made therein without departing from the scope of the present invention.

## Claims

1. A recording medium, comprising:
a management area for managing a record position of a program; and
a program area in which a cue signal is recorded, the cue signal being superimposed with the program, the program being divided into a plurality of record units with the cue signal.

2. A recording medium as set forth in claim 1, wherein an audio signal as a word or sentence is recorded to each record unit in the program area.

3. A recording medium as set forth in claim 1 or 2, wherein character information for each record unit and a predetermined division symbol for causing the character information and each record unit to be synchronously reproduced are further recorded in the management area.

4. A recording medium as set forth in any one of the preceding claims, wherein character information corresponding to each record unit is encoded with a predetermined character code, superimposed with the program, and recorded in the program area.

5. A recording medium as set forth in any one of the preceding claims, wherein a control signal for controlling a reproducing operation of the record medium is encoded with a predetermined control code, superimposed with the program, and recorded in the program area.

6. A recording medium as set forth in any one of the preceding claims, wherein the program recorded in the program area is composed of at least two channels, an audio signal being recorded to a first channel, the cue signal being recorded to a second channel.

7. A recording medium as set forth in any one of the preceding claims, wherein the cue signal is an inaudible signal.

8. A reproducing apparatus, comprising:
reproducing means for reproducing a signal from a record medium having a management area for managing a record position of a program and a program area in which a cue signal is recorded, the cue signal being superimposed with the program, the program being divided into a plurality of record units with the cue signal;
cue signal detecting means for detecting the cue signal reproduced from said reproducing means;
means for access-controlling each program corresponding to a record position managed in the management area; and
means for access-controlling each of record units divided corresponding to the cue signal detected by said cue signal detecting means.

9. A reproducing apparatus as set forth in claim 8, wherein
the access position of each record unit is detected corresponding to the cue signal, and
the cue signal is detected by reproducing the program area at high speed.

10. A reproducing apparatus as set forth in claim 8 or 9, further comprising:
storing means for separately storing the character information for each record unit corresponding to a division symbol; and
displaying means for displaying the character information stored in said storing means in synchronization with each record unit that is reproduced, and
wherein the character information for each record unit and a predetermined division symbol for causing the character information ad each record unit to be synchronously reproduced are further recorded in the management area.

11. A reproducing apparatus as set forth in any one of claims 8 to 10, further comprising:
a decoder for detecting and demodulating the character information encoded with a predetermined character code, superimposed with the program, and recorded in the program area; and
displaying means for displaying the character information demodulated by said decoder in synchronization with each record unit that is reproduced.

12. A reproducing apparatus as set forth in any one of claims 8 to 11, further comprising:
a decoder for detecting and demodulating a control signal that is encoded with a predetermined control code, superimposed with the program, and recorded in the program area, the control signal controlling a reproducing operation of the record medium; and
means for controlling the reproducing operation of the record medium corresponding to the control signal demodulated by said decoder.

13. A reproducing system, comprising:
a reproducing portion for reproducing a signal from a record medium having a management area for managing a record position of a program and a program area in which a cue signal is recorded, the cue signal being superimposed with the program, the program being divided into a plurality of record units with the cue signal; and
a remote controlling portion, wherein said reproducing portion has:
reproducing means for reproducing the management area and the program area of the record medium,
travel controlling means for travelling the reproducing means corresponding to a record position of the management area reproduced by the reproducing means, and
outputting means for outputting a program and a cue signal of the program area reproduced by the reproducing means,
wherein said remote controlling means has:
detecting means for detecting the cue signal that is output from the outputting means of said reproducing portion,
storing means for storing a reproduction address of the reproducing means of said reproducing portion when the cue signal is detected by the detecting means;
operating means for causing the reproducing means to travel for each of a plurality of record units divided with the cue signal, and
transferring means for transferring a transfer command of the operating means and a reproduction address stored in the storing means to the travel controlling means of said reproducing portion, and
wherein the operating means of said remote controlling portion is operated, the travel controlling means travels the reproducing means corresponding to the reproduction address stored in the storing means of said remote controlling portion.

14. A reproducing system as set forth in claim 13, wherein the program recorded in the program area is composed of at least two channels, an audio signal being recorded to a first channel and the cue signal being recorded to a second channel.

15. A reproducing system as set forth in claim 13 or 14, wherein said remote controlling portion further comprises:
stereo outputting means for outputting the audio signal received from the first channel to the second channel.

16. A remote controlling apparatus for controlling a reproducing apparatus that reproduces signals from a first record medium and a second record medium, the first record medium having a management area and a program area, a record position of a program being managed in the management area, the program being recorded in the program area, audio signals of at least two channels being recorded in the program area, the second record medium having a management area and a program area, a record position of a program being managed in the management area, the program being recorded in the program area, the program area being composed of at least two channels, an audio signal being recorded on a first channel, a cue signal being recorded on a second channel, one program being divided into a plurality of record units with the cue signal, the remote controlling apparatus comprising:
detecting means for detecting the cue signal that is output from the reproducing apparatus;
determining means for determining whether the current record medium is the first record medium or the second record medium depending on whether the cue signal is present or absent;
switching means for outputting the audio signals of at least two channels reproduced from the first record medium when the determined result by said determining means is the first record medium and for outputting the audio signal of the first channel reproduced from the second record medium to the second channel when the determined result by said determining means is the second record medium; and
outputting means for outputting the audio signals selected by said switching means.

17. A remote controlling apparatus as set forth in claim 16, further comprising muting means for muting the cue signal while the audio signals are being reproduced from the second record medium.

18. A remote controlling apparatus as set forth in claim 16 or 17, further comprising operating means for causing the reproducing apparatus to reproduce each of the record units of the audio signal while the audio signals are being reproduced from the second record medium.
